(19) Europäisches Patentamt
European Patent Office
Office européen des brevets

(11) **EP 1 246 501 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**10.09.2014 Patentblatt 2014/37**

(45) Hinweis auf die Patenterteilung:
**24.11.2010 Patentblatt 2010/47**

(21) Anmeldenummer: **02002227.3**

(22) Anmeldetag: **30.01.2002**

(51) Int Cl.:
*H04Q 9/00* (2006.01)          *G01D 4/00* (2006.01)
*G08C 17/02* (2006.01)

(54) **Verfahren und Vorrichtung zur Ablesung von Verbrauchsdatenerfassungsgeräten**

Method and apparatus for reading of utility meters

Procédé et dispositif de lecture de compteurs de consommation

(84) Benannte Vertragsstaaten:
**AT BE CH CY DE DK ES FI FR GB GR IE IT LI LU MC NL PT SE TR**
Benannte Erstreckungsstaaten:
**RO**

(30) Priorität: **28.03.2001 DE 10115552**
**06.07.2001 DE 10132971**

(43) Veröffentlichungstag der Anmeldung:
**02.10.2002 Patentblatt 2002/40**

(73) Patentinhaber: **Techem Energy Services GmbH**
**65760 Eschborn (DE)**

(72) Erfinder: **Matussek, Dirk**
**60318 Frankfurt am Main (DE)**

(74) Vertreter: **Keil & Schaafhausen**
**Patent- und Rechtsanwälte**
**Friedrichstrasse 2-6**
**60323 Frankfurt am Main (DE)**

(56) Entgegenhaltungen:
**US-A- 5 617 084     US-B1- 6 172 616**

EP 1 246 501 B2

**Beschreibung**

Die Erfindung betrifft ein Verfahren zur Ablesung von Verbrauchswerten aus Verbrauchsdatenerfassungsgeräten mittels drahtloser Übertragung insbesondere in Gebäuden gemäß dem Oberbegriff des Anspruchs 1, bei dem die Verbrauchswerte im Verbrauchsdatenerfassungsgerät gespeichert und zu zufällig oder pseudozufällig bestimmten Sendezeitpunkten von dem Verbrauchsdatenerfassungsgerät ausgesendet werden sowie eine dafür geeignete Vorrichtung.

Zur Zeit sind verschiedene Konzepte von drahtlosen Verbrauchsdatenerfassungssystemen für die Erfassung von Heizkosten, Wärme- und Wasserverbrauch oder dgl. auf dem Markt. Die Systeme verwenden für das Aussenden von Funktelegrammen in der Regel die freigegebenen SRD-Frequenzbänder, die in Europa bei 434 MHz und 868 MHz liegen.

Bei bidirektionalen Systemen sind die Verbrauchsdatenerfassungsgeräte jeweils mit einem Funksender und -empfänger ausgerüstet. Die Verbrauchswerte und ggf. eine Verbrauchswerthistorie werden ausgesendet, sobald der Funkempfänger eine Ableseanforderung empfängt. Dies geschieht in der Regel nach Ende einer Abrechnungsperiode und wird meist von einem tragbaren, mit einem Funksender und -empfänger ausgerüsteten Ablesegerät ausgelöst, das die Verbrauchswerte der in seiner Reichweite liegenden Erfassungsgeräte empfängt und speichert. Die bidirektionalen Systeme haben den Nachteil, dass bei jedem Erfassungsgerät zusätzlich Kosten für den Empfänger der Ableseanforderung anfallen. Hinzu kommen höhere Batteriekosten, da wegen des nicht über Jahre genau planbaren Ablesezeitpunktes für längere Zeiträume eine Empfangsbereitschaft sichergestellt werden muss. Ein weiterer Nachteil des bidirektionalen Systems liegt darin, dass die für eine spätere Zwischenabrechnung benötigte und in den Erfassungsgeräten gespeicherte gesamte Verbrauchswerthistorie während der angeforderten Funkauslesung übertragen werden muss. Dies führt zu verlängerten Auslesezeiten und damit zu erhöhten Ablesekosten.

Unidirektionale Systeme arbeiten dagegen auf der Seite der Verbrauchsdatenerfassungsgeräte nur mit je einem Funksender, der mehrmals täglich die Verbrauchswerte aussendet. Diese werden von in der Regel fest installierten Datensammlern im Hausflur oder Treppenhaus empfangen, die im Laufe einer Abrechnungsperiode (meist ein Jahr) die verschiedenen Verbrauchswerte speichern. Bei der periodischen, z.B. jährlichen, Ablesung der Datensammler liegt dort dann für jedes Verbrauchsdatenerfassungsgerät eine vollständige Verbrauchswerthistorie der vergangenen Abrechnungsperiode vor, z.B. im Monatsraster. Die Historie kann für Zwischenabrechnungen, die z.B. bei zwischenzeitigen Mieterwechseln nötig werden, auch nachträglich, d.h. nach Ende der Abrechnungsperiode, ausgewertet werden. Die nachträgliche Auswertung der Zwischenwerte ist der Regelfall, da meistens die Abrechnung bzw. Verteilrechnung des Verbrauchs in einem Gebäude erst nach Vorliegen der Wasser-, Wärme- und dgl. Gesamtkosten für eine Abrechnungsperiode möglich ist. Diese unidirektionalen Ablesesysteme haben den Nachteil, dass zusätzlich zu den Erfassungsgeräten fest installierte Datensammler im Gebäude benötigt werden. Für die Beurteilung der Wirtschaftlichkeit eines solchen Systems müssen die Kosten aller Datensammler eines Gebäudes auf die Menge der Erfassungsgeräte umgelegt werden. Somit sind solche Systeme allenfalls in Gebäuden mit einer hohen Dichte von Erfassungsgeräten wirtschaftlich.

Bei einer speziellen Gruppe von unidirektionalen Ablesesystemen senden die Erfassungsgeräte ihre Verbrauchswerte in einem sehr schnellen Rhythmus, z.B. alle 15 Sekunden, aus, so dass auch hier der Empfang mit einem tragbaren Ablesegerät (oder mit einem Mobilempfänger in einem Fahrzeug) innerhalb einer vertretbar kurzen Ablesezeit möglich wird. Obwohl bei einem solchen System weder ein zusätzlicher Empfänger im Erfassungsgerät noch fest installierte Datensammler im Gebäude nötig sind, ist auch mit diesem System kein Kostenvorteil verbunden, da aufgrund der hohen Sendehäufigkeit ein erhöhter Energieverbrauch nötig ist. Bei den batteriebetriebenen Erfassungsgeräten werden somit die Kosten für Batterien und Wartung erhöht, und die erforderliche lange (wartungsfreie) Einsatzzeit von 5 oder 10 Jahren ist bei sinnvollen Batteriekosten und -größen nicht zu erreichen.

Aus der US 5,617,084 A ist ein System zur Übermittlung von Verbrauchsinformationen von einer Verbrauchsstation an ein Erfassungsgerät bekannt. Das Übertragungsintervall, in dem die Informationen von der Verbrauchsstation ausgesendet werden, kann in einer sehr dichten Installation von Verbrauchsstationen bei der Einrichtung vergrößert werden, um Kollisionen zu vermeiden.

Die US 6,172,616 B1 beschreibt ein großflächiges Kommunikationsnetzwerk beispielsweise zur Übertragung von Verbrauchsdaten. Einzelne Module des Systems können dazu eingerichtet werden, in verschiedenen Intervallen unterschiedliche Telegrammtypen übertragen zu können. Ferner sorgt eine Kommunikationssteuerung dafür, dass in einer vorbestimmten Ruhezeit keine Übertragung stattfindet.

Aufgabe der Erfindung ist es, ein drahtloses System zur Verbrauchswerterfassung vorzuschlagen, bei dem weder Datensammler installiert noch die Erfassungsgeräte mit Funkempfängern ausgerüstet werden müssen und dennoch eine zuverlässige Auslesung der Verbrauchswerte innerhalb einer akzeptablen Ablesezeit über einen langen Einsatzzeitraum möglich ist.

Diese Aufgabe wird erfindungsgemäß durch ein Verfahren der eingangs genannten Art mit den Merkmalen des Anspruchs 1 gelöst, bei dem die mittlere Sendehäufigkeit in festlegbaren Zeiträumen variierbar ist. Die vorgeschlagene Lösung geht davon aus, dass die Ablesung der Verbrauchswerte normalerweise in Zeiträumen stattfindet, die im Voraus festgelegt werden. Daher wird in diesen Zeiträumen die mittlere Sendehäufigkeit erhöht, so dass eine schnelle Auslesung der Verbrauchswerte möglich ist. In der übrigen Zeit wird die Aussendefrequenz dagegen soweit verringert, dass sich die durchschnittliche Zahl der Aussendungen pro Abrechnungsperiode auf einen hinsichtlich der zur Verfügung stehenden Batteriekapazität akzeptablen Wert verringert, um eine lange Einsatzzeit der Batterien zu ermöglichen. Dennoch ist in diesem Zeitraum mit verminderter Sendehäufigkeit eine Auslesung der Verbrauchswerte möglich, bspw. wenn eine Auslesung zu der vorgesehenen Zeit verpasst wurde. Es wird in diesen Fällen lediglich eine längere Auslesezeit benötigt.

Die Ablesung der Verbrauchswerte eines Gebäude erfolgt regelmäßig einmal jährlich innerhalb eines relativ kurzen Zeitraums nach dem relevanten Stichtag der Abrechnungsperiode bspw. mittels eines tragbaren Ablesegerätes mit Funkempfänger. Erfindungsgemäß wird vorgeschlagen, dass die mittlere Sendehäufigkeit nach dem Stichtag in dem ersten Zeitraum gegenüber einem nachfolgenden zweiten Zeitraum erhöht ist.

In Fortführung des Erfindungsgedankens soll ein weiteres grundsätzliches Problem bei der Auslesung der Verbrauchsdaten gelöst werden. Insbesondere bei unidirektionalen Funksystemen müssen die Funktelegramme sehr kurz gehalten werden. Dies hat u.a. folgende Gründe: In Gebäuden mit sehr vielen Erfassungsgeräten würde es bei zu langen Funktelegrammen zu unvertretbar hohen Kollisionsraten bei den Funktelegrammen und damit wiederum zu erhöhten Ablesezeiten kommen. In einigen der in Frage kommenden Frequenzbereichen gibt es zudem zulassungsseitige Duty-Cycle-Beschränkungen von beispielsweise 0,1%, gemittelt über eine Stunde. Ferner muss die für den Sender benötigte Ladungsmenge in einem Kondensator zwischengespeichert werden, da die üblichen Lithium-Batterien der Erfassungsgeräte den Sendestrom nicht direkt liefern können. Daher beschränken die praktisch verfügbaren Kondensatorkapazitäten und -leckströme die Dauer der Aussendungen.

Zur notwendigen Kürze der Verbrauchswert-Funktelegramme (typischerweise ca. 4 ms) kommt durch die üblicherweise eingesetzten preiswerten Mikrocontroller eine begrenzte Datenübertragungsrate von deutlich unter 100 kBd hinzu. Neben dem für die Übertragungssicherheit nötigen Overhead, wie z.B. einer DC-freien Bitkodierung, einer Präambel zum Einschwingen des Empfängers, einer Synchronisationssequenz und Prüfziffern zur Fehlererkennung, muss außerdem in jedem Funktelegramm eine gerätespezifische eindeutige Identifikationsnummer übertragen werden. Unter diesen Randbedingungen ist es mithin unmöglich, mehr als einen oder zwei Verbrauchswerte, ggf. inklusive der aus eichrechtlichen Gründen erforderlichen dazugehörigen Zeitangabe, pro Aussendung zu übermitteln. Dabei beschränkt man sich meistens auf den letzten Stichtagsverbrauchswert, der für die Abrechnung am wichtigsten ist. Eine Übertragung von Verbrauchswerthistorien für Zwischenabrechnungen, z.B. bei unterjährigem Mieterwechsel, ist so bei der Stichtagsablesung unmöglich. Die benötigten Werte können nur auf dem Wege der Zwischenablesung, die mit einer oder mehreren Anfahrten zum Gebäude verbunden ist, gewonnen werden.

Daher ist es eine weitere Aufgabe der Erfindung, die Verbrauchswerte und Verbrauchswerthistorien für Zwischenabrechnungen in einer Ablesung verfügbar zu machen.

Dies wird bei einem Verfahren zur Ablesung von Verbrauchswerten und Verbrauchswerthistorien aus Verbrauchsdatenerfassungsgeräten mittels drahtloser Übertragung, bei dem die Verbrauchswerte im Verbrauchsdatenerfassungsgerät mit einer Zeitkennung gespeichert und zu zufällig oder pseudozufällig bestimmten Sendezeitpunkten von dem Verbrauchsdatenerfassungsgerät ausgesendet werden, dadurch erreicht, dass die Verbrauchswerte in einer vorgegebenen, sich zyklisch wiederholenden Reihenfolge ausgesendet werden. Dabei kann die jeweilige Zeitkennung nach Empfang des entsprechenden Verbrauchswertes angezeigt werden, so dass die Ablesung abgebrochen werden kann, wenn die benötigten Verbrauchswerte ausgelesen sind.

Besonders vorteilhaft ist es, wenn bei der zyklischen Aussendung aller Verbrauchswerte in einem Durchgang jeweils eine vorgegebene Anzahl von chronologisch geordneten Verbrauchswerten übersprungen wird und in darauf folgenden Durchgängen der Start-Verbrauchswert jeweils so variiert wird, dass noch nicht ausgesendete Verbrauchswerte ausgesendet werden, bis alle Verbrauchswerte ausgesendet sind. Erst dann wird der gesamte Aussendungszyklus wiederholt. Schon nach dem Empfang weniger Funktelegramme mit Verbrauchswerten baut sich so ein Verbrauchswertraster einer bestimmten Grunddichte auf. Dadurch muss nicht ein kompletter Wiederhol- bzw. Aussendungszyklus der Verbrauchswerte abgewartet werden, sondern der Ableser hat die Option, sich mit einem Satz von Verbrauchswerten zu begnügen, der eine definierte geringere zeitliche Dichte aufweist. Dabei ist es gleichgültig, zu welchem Zeitpunkt er mit dem Empfang der Funktelegramme beginnt, d.h. an welcher Stelle er in den Sendezyklus einspringt.

Um die Dauer eines Aussendungszyklus zu verringern, können die Verbrauchswerte zu Paketen zusammengefasst werden, wobei ein Paket nur einen Teil der gesamten Verbrauchswerte enthält. Die Anzahl der Verbrauchswerte in einem Paket ist hierbei durch die maximale Länge der Funktelegramme begrenzt.

Da normalerweise der für die Abrechnung relevante Verbrauchswert (Stichtagswert) immer benötigt wird, ist erfindungsgemäß vorgesehen, dass jedes Paket von Verbrauchswerten jeweils den Stichtagswert und mindestens einen Verbrauchswert aus der letzten Abrechnungsperiode und/oder den aktuellen Verbrauchswert der laufenden Abrechnungsperiode (Zwischenwert) enthält. In diesem Fall werden nur die Zwischenwerte in einer sich zyklisch wiederholenden Reihenfolge ausgesendet. Der Stichtagswert wird in jeder Aussendung übertragen. Dadurch steht dieser wichtige Wert garantiert immer nach dem Empfang eines Telegramms zur Verfügung. Ist von vornherein klar, dass in einem Gebäude keine Zwischenwerte benötigt werden (z.B. weil kein Nutzerwechsel stattgefunden hat), so kann die Ablesedauer auf den Empfang eines Funktelegramms beschränkt werden.

Nach einer weiteren vorteilhaften Ausgestaltung des erfindungsgemäßen Verfahrens werden Verbrauchswerte aus bestimmten Zeitintervallen häufiger ausgesendet als Verbrauchswerte außerhalb dieser Zeitintervalle. Dadurch werden bspw. Zwischenwerte außerhalb der Heizperiode in einem gröberen Raster akzeptiert, und Zwischenwerte innerhalb der Heizperiode können so schneller ein dichteres Raster aufbauen. Diese Variante ist besonders für Gebäude geeignet, in denen nur der (saisonabhängige) Wärmeverbrauch erfasst wird.

Besonders vorteilhaft ist eine Kombination beider Verfahren, bei der sowohl die mittlere Sendehäufigkeit in festlegbaren Zeiträumen variiert wird als auch die Verbrauchswerte in einer vorgegebenen, sich zyklisch wiederholenden Reihenfolge ausgesendet werden.

Dadurch ist es möglich, in einem Zeitraum erhöhter Sendehäufigkeit zyklisch die Verbrauchswerte der letzen Abrechnungsperiode und in anderen Zeiträumen jeweils den aktuellen Verbrauchswert der laufenden Abrechnungsperiode auszusenden. Dies ermöglicht zeitnahe Zwischenablesungen durch unterjährige Anfahrt zum Gebäude.

Ferner ist erfindungsgemäß vorgesehen, dass die Verbrauchsdatenerfassungsgeräte die Verbrauchswerte unidirektional zu Empfangsgeräten aussenden. Die Auslesung der Verbrauchswerte kann besonders einfach mittels eines tragbaren Empfangsgeräts mit Funkempfänger erfolgen.

Für gängige Kostenabrechnungen hat es sich als ausreichend erwiesen, wenn die Auslesung der Verbrauchswerte regelmäßig einmal jährlich erfolgt und in dem Verbrauchsdatenerfassungsgerät jeweils die Verbrauchswerte aus der letzen Abrechnungsperiode als Monatswerte gespeichert sind.

Schließlich betrifft die Erfindung noch eine Vorrichtung zur Durchführung der vorbeschriebenen Verfahren mit einem Verbrauchsdatenerfassungsgerät, einem Sender zur Aussendung der Verbrauchswerte und einer Recheneinheit mit Speicher, die zur Durchführung der einzelnen Verfahrensschritte eingerichtet ist. Die Recheneinheit ist als Mikroprozessor ausgebildet.

Nachfolgend wird das erfindungsgemäße Verfahren am Beispiel einer jährlichen Ablesung von Verbrauchswerten beschrieben, bei dem ein für die Abrechnung relevanter Stichtagswert und 11 Zwischenwerte als Monatswerte ausgelesen werden. Dabei ergeben sich weitere Merkmale und Vorteile des erfindungsgemäßen Verfahrens, die unabhängig von den Merkmalen in den Ansprüchen und deren Rückbeziehung Teil der vorliegenden Erfindung sind.

Bei einem unidirektionalen Auslesesystem werden die in dem elektronischen Verbrauchsdatenerfassungsgerät gespeicherten Verbrauchswerte zu zufällig oder pseudozufällig bestimmten Zeitpunkten mit einer mittleren Sendehäufigkeit in einem Funktelegramm ausgesendet. Die Zeitpunkte zur Aussendung werden mittels einer Uhr und einem Kalender bestimmt, die zur termingerechten Abspeicherung des Stichtagswertes und ggf. von Zwischenwerten in den Erfassungsgeräten vorhanden sind.

Nach dem Erreichen des Stichtages wird für einen durch Programmierung festlegbaren Zeitraum die mittlere Sendehäufigkeit erhöht. Für den Rest der laufenden Abrechnungsperiode wird die mittlere Sendehäufigkeit dann herabgesetzt, wodurch sich die durchschnittliche Zahl der Sendungen pro Abrechnungsperiode auf einen hinsichtlich der zur Verfügung stehenden Batteriekapazität akzeptablen Wert verringert.

Wenn die mittlere Sendehäufigkeit für 30 Tage nach dem Stichtag 120 Sendungen pro Stunde und für den Rest der Abrechnungsperiode nur 12 Sendungen pro Stunde beträgt, ergibt sich gemittelt über das Gesamtjahr eine Sendehäufigkeit von nur 21 Sendungen pro Stunde. Es stehen also 30 Tage lang nach dem Stichtag häufig gesendete Telegramme zur Verfügung, während die Sendehäufigkeit im Jahresmittel um den Faktor 5,7 niedriger liegt.

Jedes ausgesendete Funktelegramm enthält zwei zu einem Paket zusammengefasste Verbrauchswerte. Es sind dies der für die Abrechnung relevante Verbrauchswert (Stichtagswert) und jeweils einer der Verbrauchswerte aus der letzten Abrechnungsperiode (Zwischenwert). Die Zwischenwerte werden im Funktelegramm als Zeitkennung mit einem eindeutigen Unterscheidungsmerkmal versehen, damit die zeitliche Zuordnung der Zwischenwerte immer möglich ist. Dies kann z.B. eine Datumsangabe oder eine laufende Nummer innerhalb der Abrechnungsperiode sein. Die Telegramminhalte werden zyklisch verändert, bis alle relevanten Zwischenwerte ausgesendet wurden. Danach wird der Zyklus wiederholt. Ein Ableser muss so bspw. mit einem tragbaren Ablesegerät durchschnittlich für die Dauer eines mittleren schnellen Sendeintervalls auf die Stichtagswerte der Erfassungsgeräte warten. Will er zusätzlich alle N Zwischenwerte der vergangenen Ableseperiode empfangen, so verlängert sich die Dauer der Ablesung um den Faktor N. Bei Durchführung der Ablesung im Zeitraum der erhöhten Sendehäufigkeit bleibt auch diese Dauer in einem akzeptablen Rahmen.

Bei den Zeitangaben ist zu berücksichtigen, dass es wegen der zufälligen und unabhängigen Sendezeitpunkte der Verbrauchsdatenerfassungsgeräte zu zeitlichen Kollisionen der Aussendungen kommen kann. Dies ist umso wahrscheinlicher, je größer die Anzahl der Erfassungsgeräte im Reichweitenbereich des tragbaren Ableseempfängers ist. Durch Ausnutzung des so genannten Capture-Effekts kann aber sichergestellt werden, dass bei einer Kollision jeweils das stärkere Funksignal, d.h. in der Regel das Signal des räumlich näheren Erfassungsgerätes, ungestört empfangen wird. So kann man davon ausgehen, dass der Ableser bei seiner Gebäudebegehung nach und nach alle Erfassungsgeräte in den näheren, und damit nur schwer durch Kollisionen störbaren Reichweitenbereich bringen kann.

Bei einer mittleren Sendehäufigkeit von 120 Sendungen pro Stunde in 30 Tagen nach dem Stichtag und einer zyklischen Aussendung der Verbrauchswerte der vorausgehenden elf Monate der letzten Abrechnungsperiode (N = 11 Zwischenwerte) beträgt die mittlere Ablesedauer für den Stichtagswert 30s und für den Stichtagswert und die anderen 11 Zwischenwerte 5½ min.

Wenn in einer Variante des Verfahrens zusätzlich zu den N Zwischenwerten der vergangenen Abrechnungsperiode der jeweils aktuelle Verbrauchswert der laufenden Abrechnungsperiode zyklisch ausgesendet wird, um zeitnahe Zwischenablesungen standardmäßig zu ermöglichen, verlängert sich die mittlere Ablesedauer um weitere 30s.

Da normalerweise nur in dem Sendezeitraum mit erhöhter Sendehäufigkeit von etwa 30 Tagen nach dem Stichtag die Zwischenwerte der letzten Abrechnungsperiode für eine Abrechnung benötigt werden, ist es ausreichend, diese nur im Zeitraum der erhöhten Sendehäufigkeit ggf. zusammen mit dem aktuellen Verbrauchswert zyklisch zu wiederholen. Im übrigen Zeitraum mit verringerter Sendehäufigkeit hingegen wird jeweils nur der aktuelle Verbrauchswert der laufenden und der Stichtagswert der vergangenen Abrechnungsperiode vom Erfassungsgerät ausgesendet.

Anstatt alle Zwischenwerte in der chronologischen Reihenfolge ihres historischen Auftretens zu wiederholen, können diese in einem verflochtenen Schema ausgesendet werden. Diese Verflechtung sorgt dafür, dass im zeitlichen Verlauf des Wiederholungszyklus' die zeitliche Verdichtung des Zwischenwerterasters erhöht wird. So kann der Ableser, der zu einem zufälligen Zeitpunkt im Wiederholungszyklus eines jeden Erfassungsgerätes mit dem Empfang beginnt, durch die Ablesedauer bestimmen, in welcher Dichte er die Verbrauchswerthistorie erhält. Umgekehrt kann auch die für die Abrechnung benötigte Wertedichte die erforderliche Ablesedauer festlegen. Je nach geforderter Genauigkeit können vergleichsweise genaue Werte auch aus einer geringeren Verbrauchswertdichte extrapoliert werden.

In einem Beispiel für ein Verflechtungsschema werden elf Monatsendwerte als Zwischenwerte übertragen. Diese sind mit den laufenden Nummern 1 für Januar bis 11 für November der Abrechnungsperiode bezeichnet. Der Abrechnungsstichtag ist der 31. Dezember. Der Stichtagswert ist mit 12 bezeichnet und wird in jedem Funktelegramm übertragen. Ein möglicher Zyklus der Zwischenwerte ist:

$$1 - 5 - 9 - 2 - 6 - 10 - 3 - 7 - 11 - 4 - 8$$

Diese Sequenz wird zyklisch wiederholt und ist so angelegt, dass nach dem Empfang von drei Telegrammen immer ein Satz von vier Verbrauchswerten vorliegt, in dem der Abstand von zwei beliebigen Zwischenwerten höchstens vier Monate beträgt. Dies gilt unabhängig davon, an welcher zufälligen Stelle der Ableser in den Zyklus "hineinspringt".

Ein weiterer Zyklus der Zwischenwerte liegt in der Kombination:

$$1 - 4 - 7 - 10 - 2 - 5 - 8 - 11 - 3 - 6 - 9$$

Diese Sequenz wird zyklisch wiederholt und ist so angelegt, dass nach dem Empfang von vier Telegrammen immer ein Satz von fünf Verbrauchswerten vorliegt, in dem der Abstand von zwei beliebigen Zwischenwerten höchstens drei Monate beträgt. Dies gilt unabhängig davon, an welcher zufälligen Stelle der Ableser in den Zyklus "hineinspringt".

Ebenso ist der Zyklus der Zwischenwerte:

$$1 - 3 - 5 - 7 - 9 - 11 - 2 - 4 - 6 - 8 - 10$$

möglich. Auch diese Sequenz wird zyklisch wiederholt und ist so angelegt, dass nach dem Empfang von sechs Telegrammen immer ein Satz von fünf Verbrauchswerten vorliegt, in dem der Abstand von zwei beliebigen Zwischenwerten höchstens zwei Monate beträgt. Dies gilt unabhängig davon, an welcher zufälligen Stelle der Ableser in den Zyklus "hineinspringt".

Die angegebenen Schemata funktionieren jeweils auch in umgekehrter Reihenfolge. Sollten andere als die in wenigen Telegrammen empfangenen Zwischenwerte für eine Zwischenabrechnung bspw. einer Heizkostenabrechnung benötigt werden, können diese durch Interpolation, ggf. zusätzlich unter Berücksichtigung von Gradtagszahlen, gewonnen werden.

Das beschriebene Verfahrensbeispiel entspricht einer typischen Anwendung bei der Heizkostenabrechnung. Es lässt sich aber ebenso für die Ablesung anderer Verbrauchswerte anwenden, wobei die Anzahl der auszulesenden Verbrauchswerte, die Zeiträume mit höherer und niedriger Sendehäufigkeit, die Auslesezyklen und weitere Parameter des Verfahrens den jeweiligen Erfordernissen angepasst werden können.

Das erfindungsgemäße Verfahren bietet den Vorteil, dass es die wirtschaftlichen Vorteile der herkömmlichen uni- und bidirektionalen Funk-Ablesesysteme miteinander verbindet, ohne dass dabei auf Zwischenwerthistorien verzichtet werden muss. Diese können in der gewünschten zeitlichen Dichte gewonnen werden, wobei ein Optimum aus Wertedichte und Ablesezeitaufwand eingestellt werden kann. Diese Einstellung erfolgt im Vorfeld durch Wahl des geeigneten Sendeschemas und der Sendehäufigkeit im Zeitraum nach dem Stichtag sowie vor Ort durch den bei der Ablesung festlegbaren oder zur Verfügung stehenden Zeitaufwand.

Wenn in bestimmten Gebäuden für bestimmte Abrechnungsperioden bekannt ist, dass keine Zwischenwerte benötigt werden, so kann mit dem Empfang nur eines Funktelegramms von jedem Erfassungsgerät der Stichtagswert übertragen werden.

Auch unterjährige Zwischenablesungen während der laufenden Abrechnungsperiode mit eigener Anfahrt zum Gebäude sind möglich. Die im größten Teil der Periode herabgesetzte Sendehäufigkeit ist in diesem Fall kein Problem, wenn der Sendemodus so gewählt ist, dass z.B. der aktuelle Monatswert übertragen wird. Hier wird der Vorteil der Aktualität der zwischenabgelesenen Verbrauchswerte mit dem Vorteil der Verfügbarkeit kompletter Wertehistorien bei der Regelablesung verbunden.

Die Erfassungsgeräte können so ausgelegt werden, dass auch nachträglich die Installation von stationären Datensammlern im Gebäude möglich ist, bspw. für eine automatische Ablesung über ein GSM-Modem. Entweder wird in diesem Fall durch Umprogrammierung der Erfassungsgeräte deren Sendeschema auf einen für den stationären Empfang optimierten Modus umgeschaltet, oder die Erfassungsgeräte erhalten bei ihrer Montage schon einen Sendemodus, der einen optimalen Kompromiss für tragbaren und stationären Empfang darstellt. In diesem letzten Fall ist beim nachträglichen Ausrüsten mit stationären Datensammlern kein Betreten der Wohnungen nötig.

## Patentansprüche

1. Verfahren zur Ablesung von Verbrauchswerten aus Verbrauchsdatenerfassungsgeräten mittels drahtloser Übertragung, bei dem die Verbrauchswerte im Verbrauchsdatenerfassungsgerät gespeichert und zu zufällig oder pseudozufällig bestimmten Sendezeitpunkten von dem Verbrauchsdatenerfassungsgerät ausgesendet werden, wobei die mittlere Sendehäufigkeit in festlegbaren Zeiträumen variiert wird, **dadurch gekennzeichnet, dass** die mittlere Sendehäufigkeit nach dem Stichtag einer Abrechnungsperiode in einem ersten Zeitraum gegenüber einem nachfolgenden zweiten Zeitraum erhöht ist, wobei in dem zweiten Zeitraum mit verminderter Sendehäufigkeit eine Auslesung der Verbrauchswerte mittels der drahtlosen Übertragung erfolgt, und dass die Auslesung der Verbrauchswerte mittels eines tragbaren Empfangsgeräts mit Funkempfänger erfolgt.

2. Verfahren insbesondere nach Anspruch 1 zur Ablesung von Verbrauchswerten und Verbrauchswerthistorien aus Verbrauchsdatenerfassungsgeräten mittels drahtloser Übertragung, bei dem die Verbrauchswerte im Verbrauchsdatenerfassungsgerät mit einer Zeitkennung gespeichert und zu zufällig oder pseudozufällig bestimmten Sendezeitpunkten von dem Verbrauchsdatenerfassungsgerät ausgesendet werden, wobei die Verbrauchswerte in einer vorgegebenen, sich zyklisch wiederholenden Reihenfolge ausgesendet werden, **dadurch gekennzeichnet, dass** bei der zyklischen Aussendung der Verbrauchswerte in einem Durchgang jeweils eine vorgegebene Anzahl von chronologisch geordneten Verbrauchswerten übersprungen wird und in darauf folgenden Durchgängen der Start-Verbrauchswert jeweils so variiert wird, dass noch nicht ausgesendete Verbrauchswerte ausgesendet werden, bis alle Verbrauchswerte ausgesendet sind.

3. Verfahren nach Anspruch 2, **dadurch gekennzeichnet, dass** die Verbrauchswerte zu Paketen zusammengefasst werden, wobei ein Paket nur einen Teil der gesamten Verbrauchswerte enthält.

4. Verfahren nach Anspruch 3, **dadurch gekennzeichnet, dass** ein Paket von Verbrauchswerten jeweils den für die Abrechnung relevanten Verbrauchswert (Stichtagswert) und mindestens einen Verbrauchswert aus der letzten Abrechnungsperiode und/oder den aktuellen Verbrauchswert der laufenden Abrechnungsperiode (Zwischenwert) enthält.

5. Verfahren nach einem der Ansprüche 2 bis 4, **dadurch gekennzeichnet, dass** Verbrauchswerte aus bestimmten Zeitintervallen häufiger ausgesendet werden als Verbrauchswerte außerhalb dieser Zeitintervalle.

6. Verfahren nach der vorhergehenden Ansprüche, **dadurch gekennzeichnet, dass** in einem Zeitraum erhöhter Sendehäufigkeit zyklisch die Verbrauchswerte der letzten Abrechnungsperiode und in anderen Zeiträumen jeweils der aktuelle Verbrauchswert der laufenden Abrechnungsperiode ausgesendet werden.

**7.** Verfahren nach einem der vorhergehenden Ansprüche, **dadurch gekennzeichnet, dass** die Verbrauchsdatenerfassungsgeräte die Verbrauchswerte unidirektional zu Empfangsgeräten aussenden.

**8.** Verfahren nach einem der vorhergehenden Ansprüche, **dadurch gekennzeichnet, dass** die Auslesung der Verbrauchswerte regelmäßig einmal jährlich erfolgt und in dem Verbrauchsdatenerfassungsgerät jeweils die Verbrauchswerte aus der letzen Abrechnungsperiode als Monatswerte gespeichert sind.

**Claims**

**1.** A method for the reading of consumption values from consumption data monitoring devices by means of wireless transmission, in which the consumption values are stored in the consumption data monitoring device and are transmitted from the consumption data monitoring device at transmission points determined randomly or pseudo-randomly, the mean transmission frequency being varied in definable time periods, **characterized in that** the mean transmission frequency is increased after the billing date of a billing period in a first time period relative to a subsequent second time period, a reading of consumption values by means of wireless transmission taking place with a reduced transmission frequency in the second time period, and that the reading of consumption values takes place by means of a portable receiver device with a radio receiver.

**2.** The method, in particular according to claim 1, for reading consumption values and consumption value histories from consumption data monitoring devices by means of wireless transmission, in which the consumption values are stored in the consumption data monitoring device with a time code and are transmitted from the consumption data monitoring device at transmission points determined randomly or pseudo-randomly, the consumption values being transmitted in a predetermined sequence which is repeated in a cyclical manner, **characterized in that** during the cyclical transmission of the consumption values in one transmission, in each case a predetermined number of chronologically ordered consumption values is skipped and in subsequent transmissions the start-consumption value is respectively varied so that consumption values which have not yet been transmitted are transmitted until all consumption values have been transmitted.

**3.** The method according to claim 2, **characterized in that** the consumption values are combined into packets, one packet containing only a portion of all the consumption values.

**4.** The method according to claim 3, **characterized in that** one packet of consumption values in each case contains the consumption value (billing date value) which is relevant for the billing and at least one consumption value from the last billing period and/or the current consumption value of the current billing period (intermediate value).

**5.** The method according to one of the claims 2 to 4, **characterized in that** consumption values from specific time intervals are transmitted more frequently than consumption values outside these time intervals.

**6.** The method according to the preceding claims, **characterized in that** the consumption values of the last billing period are transmitted cyclically in a time period of increased transmission frequency and the respective current consumption value of the current billing period is transmitted in other time periods.

**7.** The method according to one of the preceding claims, **characterized in that** the consumption data monitoring devices transmit the consumption values unidirectionally to receiver devices.

**8.** The method according to one of the preceding claims, **characterized in that** the reading of the consumption values takes place regularly once a year and the consumption values from the last billing period are respectively stored as monthly values in the consumption data monitoring device.

**Revendications**

**1.** Procédé pour relever des valeurs de consommation provenant d'appareils d'enregistrement de données de consommation à l'aide d'une transmission sans fil, dans lequel les valeurs de consommation sont stockées dans l'appareil d'enregistrement de données de consommation et sont envoyées par l'appareil d'enregistrement de données de consommation à des moments d'émission définis aléatoirement ou pseudo-aléatoirement, la fréquence d'émission moyenne étant modifiée par périodes définissables, **caractérisé en ce que** la fréquence d'émission moyenne est augmentée après la date de référence d'une période de facturation au cours d'une première période par rapport à une seconde période consécutive, moyennant quoi au cours de la seconde période avec une fréquence d'émission réduite, il s'en suit un relevé des valeurs de consommation à l'aide de la transmission sans fil et le relevé des valeurs de consommation s'effectuant à l'aide d'un appareil de réception portatif avec un récepteur radio.

2. Procédé, en particulier selon la revendication 1, pour relever des valeurs de consommation et des historiques de valeurs de consommation provenant d'appareils d'enregistrement de données de consommation à l'aide d'une transmission sans fil, dans lequel les valeurs de consommation sont stockées dans l'appareil d'enregistrement de données de consommation avec un code de temps et sont envoyées par l'appareil d'enregistrement de données de consommation à des moments d'émission déterminés de manière aléatoire ou pseudo-aléatoire, les valeurs de consommation étant envoyées selon un ordre de succession prédéfini se répétant cycliquement, **caractérisé en ce que**, lors de l'envoi cyclique des valeurs de consommation, respectivement un nombre prédéfini de valeurs de consommation classées chronologiquement est sauté lors d'un passage et **en ce que** l'on fait respectivement varier la valeur de consommation de démarrage lors de passages consécutifs de manière à ce que des valeurs de consommation non encore envoyées soient envoyées jusqu'à ce que toutes les valeurs de consommation soient envoyées.

3. Procédé selon la revendication 2, **caractérisé en ce que** les valeurs de consommation sont groupées en paquets, un paquet contenant seulement une partie de l'ensemble des valeurs de consommation.

4. Procédé selon la revendication 3, **caractérisé en ce qu'**un paquet de valeurs de consommation contient respectivement la valeur de consommation (valeur de date de référence) pertinente pour la facturation et au moins une valeur de consommation provenant de la dernière période de facturation et/ou la valeur de consommation actuelle de la période de facturation en cours (valeur intermédiaire).

5. Procédé selon l'une des revendications 2 à 4, **caractérisé en ce que** des valeurs de consommation provenant d'intervalles de temps définis sont envoyées plus souvent que des valeurs de consommation en dehors de ces intervalles de temps.

6. Procédé selon les revendications précédentes, **caractérisé en ce que**, au cours d'une période à fréquence d'émission plus élevée, les valeurs de consommation de la dernière période de facturation sont envoyées de manière cyclique et **en ce qu'**au cours d'autres périodes, on envoie la valeur de consommation actuelle respective de la période de facturation en cours.

7. Procédé selon l'une des revendication précédentes, **caractérisé en ce que** les appareils d'enregistrement de données de consommation envoient les valeurs de consommation de manière unidirectionnelle à des appareils de réception.

8. Procédé selon l'une des revendications précédentes, **caractérisé en ce que** le relevé des valeurs de consommation s'effectue régulièrement une fois par an et **en ce que** les valeurs de consommation respectives provenant de la dernière période de facturation sont stockées dans l'appareil d'enregistrement de données de consommation en tant que valeurs mensuelles.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5617084 A
- US 6172616 B1